# EUROPÄISCHE PATENTSCHRIFT

(11) **EP 1 676 623 B1**
(45) Veröffentlichungstag und Bekanntmachung des Hinweises auf die Patenterteilung: **05.01.2011**
(21) Anmeldenummer: 05015566.2
(22) Anmeldetag: 18.07.2005
(51) Int. Cl.: B01D 53/26, F24F 3/14, F24F 3/147, B29C 45/00, B01D 5/00, B01D 53/00

(54) **Entfeuchtungsgerät und Verfahren zum Entfeuchten von Luft**
Apparatus and method for dehumidifying air
Dispositif et procède de déshumidification d'air

(30) Priorität: 28.12.2004 EP 04030917
(43) Veröffentlichungstag der Anmeldung: 05.07.2006
(73) Patentinhaber: Fasti-Koch GmbH i. Gr., 75228 Ispringen (DE)
(72) Erfinder: Girardelli, Dagobert, 6343 Erl (AT); Stipsits, Bernhard, 6300 Itter (AT)
(74) Vertreter: Wunderlich, Rainer

(56) Entgegenhaltungen:
- WO-A-86/01144
- WO-B1-86/02149
- DE-A- 4 409 607
- DE-A1- 2 644 567
- FR-A- 2 648 055
- US-A- 4 182 131
- US-A- 4 771 611
- US-A- 5 794 453
- US-B1- 6 209 223

## Beschreibung

Die Erfindung betrifft eine Vorrichtung zur Kunststoffverarbeitung.

Die Erfindung betrifft weiterhin ein Verfahren zur Kunststoffverarbeitung.

In der Kunststoffindustrie wird für Blas- und Spritzgussmaschinen, welche mit Werkzeugkühlung arbeiten, entfeuchtete, trockene Luft benötigt. Bei gekühlten Formwerkzeugen besteht an warmen und feuchten Tagen die Gefahr, dass diese "schwitzen". Dies bedeutet, dass die Luftfeuchtigkeit an den gekühlten Werkzeugflächen auskondensiert. Dieses auskondensierte Schwitzwasser kann zu Qualitätsbeeinträchtigungen der herzustellenden Kunststoffprodukte führen. So kann beim Einspritzen des aufgeschmolzenen heißen Kunststoffs das Schwitzwasser im Formwerkzeug verdampfen und zu unerwünschten Hohlräumen im Material oder zu Fehlstellen an der Oberfläche führen, was auch als "Orangenhaut" bezeichnet wird.

Um diese Probleme zu vermeiden, ist es bekannt, den Bereich um das gekühlte Werkzeug mit einem Schleier trockener Luft zu versorgen. Diese trockene Luft muss mit einem speziellen Entfeuchtungsgerät erzeugt werden.

Bekannte Geräte wie in WO 86/01144 sind mit einem Vorkühler versehen, der mit Kaltwasser aus dem Kaltwassersystem des Kunden gespeist wird. Üblicherweise handelt es sich hierbei um einen Leitungswasseranschluss. Derartige Geräte werden auch als "Chiller" bezeichnet. Da in der Kunststoffindustrie sehr viel gekühlt werden muss, arbeiten diese Kaltwasseraggregate meistens an ihrer Leistungsgrenze. Für ein weiteres Entfeuchtungsgerät ist oft keine Kapazität mehr vorhanden. In solchen Fällen müsste ein Kunde mit großem Aufwand sein Leitungswassernetz erweitern. Dies führt zu erheblichen Investitionskosten und zu einem weiter erhöhten Kaltwasserverbrauch. Zudem ist in einer Vielzahl von Regionen der industrielle Wasserverbrauch begrenzt und kann nicht beliebig ausgeweitet werden.

Die DE-A-26 44 567 beschreibt eine Luftentfeuchtungsanlage mit einem Luft-Luft-Wärmetauscher als Vorkühler und einem Verdampfer und Kondensator eines Kühlkreislaufs, in welchem die trocknende Luft gekühlt bzw. wieder erwärmt wird.

Aus der US 5 794 453 ist eine weitere Vorrichtung zum Entfernen auskondensierbarer Stoffe aus einem Gas bekannt. Das zu trocknende Gas wird dazu zunächst in einem Verdampfer eines Kühlsystems gekühlt, die auskondensierte Flüssigkeit entfernt und das Gas in einem Kondensator des Kühlsystems wieder erwärmt.

Die US 4 771 611 offenbart ein Klimagerät zum Kühlen oder Erwärmen von Luft.

Der Erfindung liegt die **Aufgabe** zugrunde, für die Kunststoffverarbeitung eine Vorrichtung und ein Verfahren anzugeben, mit welchen trockene Luft effizient und Ressourcen sparend erzeugt werden kann.

Die Aufgabe wird durch eine Vorrichtung mit den Merkmalen des Anspruchs 1 bzw. durch ein Verfahren zur Kunststoffverarbeitung mit den Merkmalen des Anspruchs 9 gelöst. Bevorzugte Ausführungsformen sind in den abhängigen Ansprüchen angegeben.

Die erfindungsgemäße Vorrichtung ist **dadurch gekennzeichnet, dass** ein Entfeuchtungsgerät zum Erzeugen trockener Luft mit einem Vorkühler, in welchem die Luft vorgekühlt wird, und einem Hauptkühler, welcher dem Vorkühhler nachgeschaltet ist und in welchem die Luft unter Abscheidung von Kondensationswasser weiter abkühlbar ist, forgesehen ist, wobei dem Vorkühler das abgeschiedene kalte Kondenswasser vom Hauptkühler als ein Kühlmedium zuführbar ist.

Die Erfindung beruht auf der Erkenntnis, dass der Vorkühler das abgeschiedene kalte Kondenswasser aus dem Hauptkühler als ein Kühlmedium verwendet. Aufgabe des Hauptkühlers ist es durch eine entsprechende Temperaturreduzierung Kondenswasser aus der angesaugten Umgebungsluft abzuscheiden. Diese Kondensationstrocknung führt verfahrensbedingt zu einer Abkühlung der Luft und Bildung von relativ kaltem Kondenswasser. Die Zuführung dieses gekühlten Mediums aus dem Hauptkühler kann zur Entlastung des Vorkühlers verwendet werden. Der Kühlenergieverbrauch des Vorkühlers kann so stark gesenkt werden. Insbesondere wird es ermöglicht, den Vorkühler mit einer geringen Menge zusätzlichen Kaltwassers oder sogar völlig ohne separates Kaltwasser aus einem Leitungssystem zu betreiben. Bei dem erfindungsgemäßen Entfeuchtungsgerät wird die eingesetzte Kühlenergie im Haupt- und Vorkühler praktisch zweifach genutzt, so dass insgesamt ein Energie sparender und damit ein sehr wirtschaftlicher Betrieb ermöglicht wird.

Eine besonders gute Energieeffizienz hat sich nach der Erfindung dadurch ergeben, dass der Vorkühler einen ersten Wärmetauscher aufweist, welcher als ein Luft-Luft-Plattenwärmetauscher ausgeführt ist. Grundsätzlich können andere bekannte Ausgestaltungen für Wärmetauscher verwendet werden.

Gemäß der Erfindung weist der Hauptkühler einen Verdampfer als einen zweiten Wärmetauscher zum Abscheiden des Kondenswassers und einen Kondensator als einen dritten Wärmetauscher auf und ist zwischen dem zweiten Wärmetauscher und dem dritten Wärmetauscher ein Kühlmedium im Kreislauf geführt. Der Hauptkühler kann dabei als ein bekanntes Kühlaggregat ausgeführt sein, bei dem ein Kühlmedium zunächst mittels eines Kompressors verdichtet und erwärmt wird. Dieses erwärmte und verdichtete Kühlmedium wird dann in einem Kondensator durch Wärmeabgabe an die Umgebung abgekühlt. Dieses auf Umgebungstemperatur abgekühlte, verdichtete Kühlmedium wird dann in einen Verdampfer unter Druckentspannung verdampft, wobei eine erhebliche Temperaturabsenkung von bis um die 0° C erreicht werden kann. Dieses verdampfte kalte Kühlmedium wird durch den zweiten Wärmetauscher geleitet, wodurch die vorgekühlte Umgebungsluft stark abgekühlt wird und auskondensiert. Auf diese Weise kann der Feuchtigkeitsgehalt der angesaugten Luft im Luftkühler erheblich reduziert werden.

Eine weitere Verbesserung der Energieeffizienz ergibt sich nach der Erfindung dadurch, dass durch den ersten und/oder dritten Wärmetauscher die entfeuchtete Luft wieder erwärmbar ist. Hierdurch wird eine Wärmerückgewinnung erreicht. Durch die Wiedererwärmung der entfeuchteten, gekühlten Luft sinkt die relative Luftfeuchtigkeit weiter. Gleichzeitig verbessert sich der Kühlungseffekt für den ersten oder den dritten Wärmetauscher, wodurch der Wirkungsgrad weiter verbessert wird.

Eine konstruktiv einfache Lösung ergibt sich nach der Erfindung dadurch, dass eine Kondenswasserwanne unterhalb des ersten Wärmetauschers und des zeiten Wärmetauschers angeordnet ist. Das abgeschiedene Kondenswasser aus dem Hauptkühler kann nach unten in die Kondenswasserwanne fließen, von wo aus es mittels einer Pumpe zum ersten Wärmetauscher geleitet werden kann.

Grundsätzlich kann das Kondenswasser in bekannter Weise durch ein Leitungssystem des ersten Wärmetauschers geführt werden, welches mit entsprechenden Lamellen zur Energieaufnahme aus dem durchgeleiteten Luftstrom versehen ist. Eine bevorzugte Ausführungsform besteht nach der Erfindung darin, dass das Kondenswasser zur Kühlung des ersten Wärmetauschers mittels Düsen versprühbar ist. Durch Versprühen des Kondenswassers kann durch die verbesserte Verteilung und gegebenenfalls einem Verdampfungseffekt eine erhöhte Kühlwirkung erzielt werden.

Eine Verbesserung der Wartung des Entfeuchtungsgerätes wird nach der Erfindung dadurch erzielt, dass dem Vorkühler ein Luftfilter vorgeschaltet ist. Auf diese Weise wird einer Verschmutzung des Gerätes vorgebeugt.

Zur Erzeugung des Luftstromes aus der Umgebung ist es erfindungsgemäß, dass ein Gebläse vorgesehen ist. Dieses Gebläse ist am Einlass oder vorzugsweise am Luftaustritt des Entfeuchtungsgerätes angeordnet, so dass der abgegebene getrockenete Luftstrom mit definierten Strömungsparametern dem Einsatzbereich, beispielsweise den gekühlten Kunststoffwerkzeugen, zugeleitet werden kann.

Grundsätzlich kann das erfindungsgemäße Entfeuchtungsgerät zu den verschiedensten Anwendungszwecken eingesetzt werden, bei welchen trockene Luft benötigt wird. Ein bevorzugter Einsatzzweck liegt nach der Erfindung darin, dass eine Vorrichtung zur Kunststoffverarbeitung mit mindestens einem Formwerkzeug gegeben ist, wobei diese Vorrichtung oder Anlage ein Entfeuchtungsgerät, wie vorbeschrieben, aufweist. Das erfindungsgemäße Entfeuchtungsgerät kann insbesondere bei gekühlten Kunststoffformwerkzeugen zuverlässig das Entstehen von Schwitzwasser und die damit verbundenen Probleme bei den Kunststoffprodukten verhindern.

Das erfindungsgemäße Verfahren zur Kunststoffverarbeitung ist **dadurch gekennzeichnet, dass** Luft entfeuchtet wird, wobei die Luft in einem Vorkühler vorgekühlt wird und anschließend in einem Hauptkühler die Luft weiter abgekühlt und dabei Kondenswasser ausgeschieden wird und wobei das abgeschiedene kalte Kondenswasser vom Hauptkühler als ein Kühlmedium dem Vorkühler zugeführt wird. Durch dieses Entfeuchtungsverfahren, welches vorzugsweise mit dem vorbeschriebenen Entfeuchtungsgerät durchgeführt wird, können die vorgenannten Vorteile erreicht werden.

Die Erfindung wird nachfolgend anhand eines bevorzugten Ausführungsbeispieles erläutert, welches schematisch in der beigefügten Zeichnungsfigur beschrieben ist.

In der stark schematisierten Zeichnungsfigur weist ein erfindungsgemäßes Entfeuchtungsgerät 10 einen Luftfilter 12 am Geräteeinlass auf. Die Strömung der Umgebungsluft wird durch ein auslassseitiges Gebläse 18 erzeugt, wobei der Strömungsverlauf durch schwarze Pfeile skizziert ist. Nach dem Durchtritt durch den Luftfilter 12 durchläuft die Umgebungsluft zunächst einen Vorkühler 14, welcher mit einem ersten Wärmetauscher ausgestattet ist. Die so vorgekühlte Luft wird dann durch einen Hauptkühler 20 geleitet.

Der Hauptkühler 20 umfasst einen Verdampfer 22 als einen zweiten Wärmetauscher sowie einen Kondensator 24 (Verflüssiger) als einen dritten Wärmetauscher. In bekannter Weise sind der Verdampfer 22 und der Kondensator 24 über eine geschlossene Leitung 29 verbunden, über welche ein Kühlmedium im Kreislauf geführt werden kann. Im Verlauf der Leitung 29 ist in bekannter Weise ein Kompressor 26 angeordnet, welcher das Kühlmedium verdichtet und dabei erwärmt. Das so erwärmte Kühlmedium wird in dem Kondensator 24 abgekühlt und dann über ein Drosselventil 28 zu dem Verdampfer 22 geleitet. Im Verdampfer 22 erfolgt aufgrund der bestimmungsgemäßen Druckentspannung eine Verdampfung des Kühlmediums und damit einher gehend eine Temperaturreduzierung. Diese Temperaturreduzierung kann über den zweiten Wärmetauscher im Verdampfer 22 an die zu trocknende, vorgekühlte Luft abgegeben werden.

Die aus dem Verdampfer 22 ausströmende gekühlte Luft wird bei der dargestellten Ausführungsform durch den Kondensator 24 als dem dritten Wärmetauscher geleitet. Hierbei kann die entfeuchtete kalte Luft wieder erwärmt werden, wobei gleichzeitig das im Kreislauf geführte Kühlmedium des Hauptkühlers 20 abgekühlt wird. Diese Wärmerückgewinnung erhöht die Energieeffizienz des erfindungsgemäßen Entfeuchtungsgerätes 10 erheblich.

Das im Verdampfer 22 abgeschiedene Kondenswasser aus der gekühlten und getrockneten Luft fließt nach unten in eine dort vorgesehene Kondensationswanne, welche sich vom Verdampfer 22 bis zum Vorkühler 14 erstreckt. Das angefallene kalte Kondensationswasser wird im Vorkühler 14 als ein Kühlmedium verwendet, so dass das erfindungsgemäße Entfeuchtungsgerät 10 nicht an ein Kaltwassersystem in einem Betrieb angeschlossen werden muss. Auch diese Rückführung des kalten Kondensationswassers und Nutzung zur Vorkühlung der einströmenden Luft erhöht die Energieeffizienz in nicht unerheblichem Maße.

Die so entfeuchtete und wieder erwärmte Luft wird über das Gebläse 18, welches einen von einem Elektromotor angetriebenen Ventilator aufweist, zu einem Trocknungsbereich geleitet. Dieser Trocknungsbereich kann insbesondere ein Werkzeugraum mit Formwerkzeugen einer Spritzgieß-, Blasform- oder Streckblasanlage sein, in welcher gekühlte Kunstoffformwerkzeuge verwendet werden.

Gegenüber herkömmlichen Entfeuchtungsgeräten kann durch die Erfindung eine Energieersparnis von 20 bis 50% bei einem wartungsfreundlichen Aufbau erreicht werden.

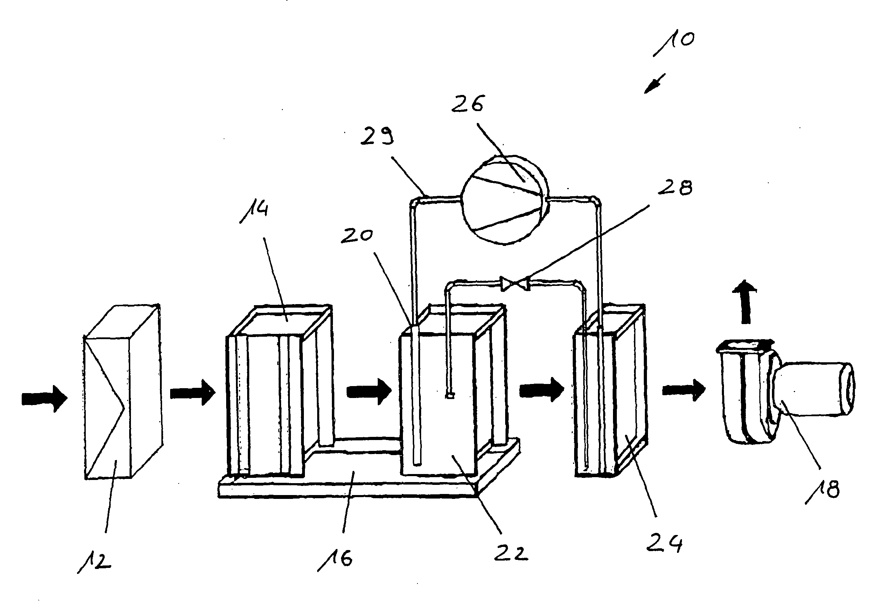

## Patentansprüche

1. Vorrichtung zur Kunststoffverarbeitung mit mindestens einem Formwerkzeug,
**dadurch gekennzeichnet,**
**dass** ein Entfeuchtungsgerät (10) zum Erzeugen trockener Luft vorgesehen ist, welches aufweist:
einen einen ersten Wärmetauscher aufweisenden Vorkühler (14), durch welchen ein Kühlmedium hindurchführbar und in welchem die Luft vorkühlbar ist, und
einen Hauptkühler (20), welcher dem Vorkühler (14) nachgeschaltet ist und einen Kondensator (24) beinhaltend einen dritten Wärmetauscher und einen Verdampfer (22) beinhaltend einen zweiten Wärmetauscher aufweist, in welchem die Luft unter Abscheidung von Kondenswasser weiter abkühlbar ist,
wobei die aus dem Verdampfer (22) ausströmende gekühlte, entfeuchtete Luft durch den Kondensator (24) leitbar und wieder erwärmbar ist, und
Mittel, um das abgeschiedene kalte Kondenswasser vom Hauptkühler (20) dem Vorkühler (14) als das Kühlmedium zuzuführen,
wobei zwischen dem zweiten Wärmetauscher und dem dritten Wärmetauscher ein Kühlmedium im Kreislauf geführt ist.

2. Vorrichtung nach Anspruch 1,
**dadurch gekennzeichnet,**
**dass** das Kondenswasser durch ein Leitungssystem des ersten Wärmetauschers führbar ist.

3. Vorrichtung nach Anspruch 1 oder 2,
**dadurch gekennzeichnet,**
**dass** zwischen dem Verdampfer (22) und dem Kondensator (24) ein Kühlmedium im Kreislauf geführt ist.

4. Vorrichtung nach einem der Ansprüche 1 bis 3,
**dadurch gekennzeichnet,**
**dass** durch den ersten Wärmetauscher die entfeuchtete Luft wieder erwärmbar ist.

5. Vorrichtung nach einem der Ansprüche 1 bis 4,
**dadurch gekennzeichnet,**
**dass** eine Kondenswasserwanne (16) unterhalb des ersten Wärmetauschers und des Verdampfers (22) angeordnet ist.

6. Vorrichtung nach einem der Ansprüche 1 bis 5,
**dadurch gekennzeichnet,**
**dass** das Kondenswasser zur Kühlung im Vorkühler (14) mittels Düsen versprühbar ist.

7. Vorrichtung nach einem der Ansprüche 1 bis 6,
**dadurch gekennzeichnet,**
**dass** dem Vorkühler (14) ein Luftfilter (12) vorgeschaltet ist.

8. Vorrichtung nach einem der Ansprüche 1 bis 7,
**dadurch gekennzeichnet,**
**dass** ein Gebläse (18) zur Erzeugung eines Luftstromes vorgesehen ist.

9. Verfahren zur Kunststoffverarbeitung,
**dadurch gekennzeichnet,**
**dass** Luft mit einem Entfeuchtungsgerät (10) nach einem der Ansprüche 1 bis 8, entfeuchtet wird,
wobei die Luft in einem Vorkühler (14), durch welchen ein Kühlmedium hindurchgeführt wird, vorgekühlt wird,
anschließend in einem Hauptkühler (20), welcher einen Kondensator (24) und einen Verdampfer (22) aufweist, die Luft weiter abgekühlt und dabei Kondenswasser abgeschieden wird,
die aus dem Verdampfer (22) ausströmende gekühlte, entfeuchtete Luft durch den Kondensator (24) geleitet und wieder erwärmt wird und
das abgeschiedene kalte Kondenswasser vom Hauptkühler (20) als das Kühlmedium dem Vorkühler (14) zugeführt wird.

## Claims

1. Device for plastic processing with at least one moulding tool,
**characterized in that**
a dehumidifying apparatus (10) for generating dry air is provided, comprising:
- a precooler (14) comprising a first heat exchanger, through which a cooling medium can be directed through and in which the air can be precooled, and
- a main cooler (20), which is located downstream of the precooler (14) and comprises a condenser (24) with a third heat exchanger and a reboiler (22) with a second heat exchanger, in which the air can be cooled further down by separating condensed water, wherein the cooled, dehumidified air effusing from the reboiler (22) can be passed through the condenser (24) and reheated, and
- means for directing the separated cooled condensed water from the main cooler (20) to the precooler (14) as the cooling medium, wherein a cooling medium is circulated between the second heat exchanger and the third heat exchanger.

2. The device according to claim 1,
**characterized in that**
the condensed water can be directed through a piping system of the first heat exchanger.

3. The device according to claim 1 or 2,
**characterized in that**
a cooling medium is circulated between the reboiler (22) and the condenser (24).

4. Device according to one of the claims 1 to 3,
**characterized in that**
the dehumidified air can be reheated by the first heat exchanger.

5. Device according to one of the claims 1 to 4,
**characterized in that**
a tray (16) for condensed water is disposed below the first heat exchanger and the reboiler (22).

6. Device according to one of the claims 1 to 5,
**characterized in that**
the condensed water can be sprayed for cooling in the precooler (14) by means of nozzles.

7. Device according to one of the claims 1 to 6,
**characterized in that**
an air filter (12) is connected upstream of the precooler (14).

8. Device according to one of the claims 1 to 7,
**characterized in that**
a blower (18) for generating an air flow is provided.

9. Method for plastic processing,
**characterized in that**
the air is dehumidified by a dehumidifying apparatus (10) according to one of the claims 1 to 8,
whereby the air is precooled in a precooler (14) through which a cooling medium is directed through,
subsequently the air is further cooled down in a main cooler (20) comprising a condenser (24) and a reboiler (22), wherein condensed water is separated, the cooled and dehumidified air effusing from the reboiler (22) is directed through the condenser (24) and reheated, and
the separated cold condensed water from the main cooler (20) is directed to the precooler (14) as the cooling medium.

## Revendications

1. Dispositif de transformation de matière plastique avec au moins un outil de formage, ***caractérisé en ce que***
un appareil de déshumidification (10) est prévu pour produire de l'air sec, lequel présente :
un pré-refroidisseur (14) présentant un premier échangeur de chaleur et à travers lequel un fluide réfrigérant peut être envoyé et dans lequel l'air peut être pré-refroidi, et
un refroidisseur principal (20) qui est monté après le pré-refroidisseur et présente un condenseur (24) contenant un troisième échangeur de chaleur et un évaporateur (22) comprenant un deuxième échangeur de chaleur, dans lequel l'air peut être encore refroidi en séparant de l'eau condensée,
dans lequel l'air déshumidifié refroidi sortant de l'évaporateur (22) peut être envoyé à travers le condenseur (24) et réchauffé, et
des moyens pour envoyer l'eau condensée froide séparée depuis le refroidisseur principal (20) jusqu'au pré-refroidisseur (14) en tant que fluide réfrigérant,
dans lequel un fluide réfrigérant circule en circuit entre le deuxième échangeur de chaleur et le troisième échangeur de chaleur.

2. Dispositif selon la revendication 1, ***caractérisé en ce que*** l'eau condensée peut être envoyée à travers un système de conduites du premier échangeur de chaleur.

3. Dispositif selon la revendication 1 ou 2, ***caractérisé en ce qu'***un fluide réfrigérant circule en circuit entre l'évaporateur (22) et le condenseur (24).

4. Dispositif selon l'une des revendications 1 à 3, ***caractérisé en ce que*** l'air déshumidifié peut être réchauffé par le premier échangeur de chaleur.

5. Dispositif selon l'une des revendications 1 à 4, ***caractérisé en ce qu'***un bac à eau condensée (16) est placé sous le premier échangeur de chaleur et l'évaporateur (22).

6. Dispositif selon l'une des revendications 1 à 5, ***caractérisé en ce que*** l'eau condensée peut être pulvérisée au moyen de buses en vue d'un refroidissement dans le pré-refroidisseur (14).

7. Dispositif selon l'une des revendications 1 à 6, ***caractérisé en ce que*** le pré-refroidisseur (14) est précédé d'un filtre à air (12).

8. Dispositif selon l'une des revendications 1 à 7, ***caractérisé en ce qu'***une soufflerie (18) est prévue pour produire un courant d'air.

9. Procédé de transformation de matière plastique,
***caractérisé en ce que***
de l'air est déshumidifié avec un appareil de déshumidification selon l'une des revendications 1 à 8,
dans lequel l'air est pré-refroidi dans un pré-refroidisseur (14) à travers lequel est envoyé un fluide réfrigérant,
puis, dans un refroidisseur principal (20) qui présente un condenseur (24) et un évaporateur (22), l'air est de nouveau refroidi et de l'eau condensée est séparée,
l'air déshumidifié refroidi sortant de l'évaporateur (22) est envoyé à travers le condenseur (24) et réchauffé, et
l'eau condensée froide séparée est envoyée du refroidisseur principal (20) au pré-refroidisseur (14) en tant que fluide réfrigérant.
